# EUROPEAN PATENT APPLICATION

(11) **EP 1 767 332 A1**
(43) Date of publication of application: **28.03.2007**
(21) Application number: 05739365.4
(22) Date of filing: 16.05.2005
(51) Int. Cl.: B29C 47/12, B29C 47/14, B29K 101/12, B29L 7/00

(54) **MOLD FOR EXTRUSION, EXTRUSION MOLDING APPARATUS, METHOD OF MANUFACTURING THERMOPLASTIC RESIN SHEET, AND METHOD OF MANUFACTURING THERMOPLASTIC RESIN FOAM SHEET**

(30) Priority: 26.05.2004 JP 2004156578; 23.08.2004 JP 2004242512
(71) Applicant: SEKISUI CHEMICAL CO., LTD., Osaka-shi, Osaka 530-8565 (JP)
(72) Inventor: ICHIHARA, Koji, c/o Sekisui Chemical Co., Ltd., Kyoto-shi, Kyoto 601-8105 (JP); KAWAUCHI, Hitoshi, c/o Sekisui Chemical Co., Ltd., Kyoto-shi, Kyoto 601-8105 (JP); TAKAHASHI, Ayuko, c/o Sekisui Chemical Co., Ltd., Kyoto-shi, Kyoto 601-8105 (JP)
(74) Representative: Merkle, Gebhard
(86) International application number: PCT/JP2005/008871
(87) International publication number: WO 2005/115720

(57) **Abstract**

The present invention provides an inexpensive extrusion die and extrusion molding apparatus which are capable of uniformizing flow rate and pressure distribution of a thermoplastic resin in width and thickness directions of the thermoplastic resin upon forming a sheet by extruding a thermoplastic resin, especially a thermoplastic resin containing a foaming agent, and readily accepting expansion/contraction of the sheet in the width and thickness directions. An extrusion die for extruding a thermoplastic resin composition comprises a resin path symmetrically branched plural times in a flow direction of a thermoplastic resin, and an extrusion molding apparatus comprises the extrusion die connected to a uniaxial or biaxial extruder.

## Description

### TECHNICAL FIELD

The present invention relates to: an extrusion die capable of uniformizing flow rate and pressure of a resin in width and thickness directions upon extrusion molding of a thermoplastic resin, and readily accepting changes in width and thickness of an extrusion sheet; an extrusion molding apparatus including the extrusion die connected to an extruder; a method of producing a thermoplastic resin sheet and a method of producing a thermoplastic resin foam sheet using the same; and a produced thermoplastic resin sheet, thermoplastic resin foam sheet and a laminated sheet thereof.

### BACKGROUND ART

Conventionally, in molding a thermoplastic resin into a sheet form by extrusion molding, there is generally used a so-called coathanger type die in which a section area of a middle center part in a resin path is reduced and both ends are widened frontward toward the ends.

However, such a coathanger type die has a difficulty in uniformizing pressure distribution and rate distribution, and has such a drawback that variation occurs in widthwise flow and flow at both ends are extremely slow.

When a sheet is formed by extruding only a thermoplastic resin, it is possible to minimize the variation and the like by optimum design of the resin path, however, if a sheet is molded while mixing inorganic gas such as carbon dioxide gas or nitrogen into the thermoplastic resin, the variation is enhanced and a uniform foam sheet cannot be obtained even if it is uniform in an non-foamed sheet state.

Furthermore, in a conventional extrusion die, it is often the case that modification and adjustment of variation in resin flow rely on experience of a technical expert on the spot, and no definite guidance is established. Therefore, trial and error should be repeated until necessary flux form is obtained, which is very difficult and time consumable.

In order to solve the aforementioned problems, for example, there is proposed a thermal displaceable T die in which a die slit gap formed by a pair of lips is adjusted by pushing/pulling a plurality of die bolts in the width direction of the lips, wherein the pair of lips are implemented by movable lips, and one of the movable lips is provided with a die bolt which is manually handled, and the other one of the movable lips is provided with a die bolt which is automatically handled by a thermal displacement actuator, and the manually handled die bolt is arranged in a smaller pitch than the automatically handled die bolt (see, for example, Patent Document 1).
Patent Document 1: Japanese Patent Publication No. 08-118455A1

The aforementioned thermal displaceable T die still needs fine adjustment in molding, and requires bulky equipment and high production cost. In addition, when a sheet is produced while mixing inorganic gas such as carbon dioxide gas or nitrogen into the thermoplastic resin, the aforementioned adjustment is further difficult, and practically, when the width is 250 mm or more, it is impossible to obtain a uniform foam sheet by adjustment only by the die lips.

### DISCLOSURE OF THE INVENTION

### PROBLEMS TO BE SOLVED BY THE INVENTION

In light of the aforementioned problems of conventional dies, it is an object of the present invention to provide an inexpensive extrusion die and an extrusion molding apparatus which are capable of uniformizing flow rate and pressure distribution of a thermoplastic resin in width and thickness directions of the thermoplastic resin upon forming a sheet by extruding a thermoplastic resin, especially a thermoplastic resin containing a foaming agent, and readily accepting expansion/contraction of the sheet in the width and thickness directions.

It is another object of the present invention to provide a method of producing a thermoplastic resin sheet and a method of producing a thermoplastic resin foam sheet, each using the extrusion die as described above.

It is still anther object of the present invention to provide a thermoplastic resin sheet and a thermoplastic resin foam sheet produced by using the aforementioned extrusion die and extrusion molding apparatus, and in particular, to provide a thermoplastic resin foam sheet and a laminated sheet thereof, which has a high mechanical strength with light weight, and is applicable as a structural material such as plastic concrete panel or scaffold plate.

### MEANS FOR SOLVING THE PROBLEMS

An extrusion die of the present invention is an extrusion die for extrusion molding a thermoplastic resin composition, comprising a resin path symmetrically branched plural times in a flow direction of the thermoplastic resin.

The extrusion die of the present invention further comprises a coathanger-like expanding part connected to an outlet of the branched resin path.

The extrusion die of the present invention further comprises an auxiliary flow path in the shape of recess groove provided on the left and right sides of the expanding part.

In the extrusion die of the present invention, the auxiliary flow path has a length which is two-thirds to four-fifths of a distance from an outlet of the upstream resin path to an abutment part with an adjacent expanding part.

The extrusion die of the present invention further comprises at least one resin pool provided on the downstream side of outlet of the branched resin path.

In the extrusion die of the present invention, the resin pool is provided with turbulence generating means.

In the extrusion die of the present invention, the length of resin path in the flow direction between the resin pool and a lip is one-tenth to three-tenths of a width of the lip.

An extrusion molding apparatus of the present invention comprises the aforementioned extrusion die connected to a uniaxial or biaxial extruder.

The extrusion molding apparatus of the present invention further comprises an air-cooling device and/or a cooling sizing device provided on the downstream side of the lip of the extrusion die.

In the extrusion molding apparatus of the present invention, the uniaxial or biaxial extruder includes a cylinder, a resin supply hopper and a gas injection nozzle provided for the cylinder, and a screw having a screw flight accommodated in the cylinder, and the gas injection nozzle has an inner diameter of 2.0 mm or less, and disposed in a position of 60 to 70% from the side of the resin supply hopper of the screw flight so that a gas injection outlet of the gas injection nozzle is located inward from an inner wall of the cylinder by 1 mm or more.

A method of producing a thermoplastic resin sheet of the present invention comprises conducting extrusion molding while supplying a thermoplastic resin composition to an extruder of the aforementioned extrusion molding apparatus.

A method of producing a thermoplastic resin foam sheet of the present invention comprises conducting extrusion molding while supplying a thermoplastic resin composition, which includes a thermoplastic resin and a thermo-decomposable chemical foaming agent, to an extruder of the aforementioned extrusion molding apparatus.

A method of producing a thermoplastic resin foam sheet of the present invention comprises conducting extrusion molding while supplying a thermoplastic resin composition, which includes a thermoplastic resin and a physical foaming agent, to an extruder of the aforementioned extrusion molding apparatus.

In the method of producing a thermoplastic resin foam sheet of the present invention, the physical foaming agent is inorganic gas.

In the method of producing a thermoplastic resin foam sheet of the present invention, the inorganic gas is carbon dioxide gas, nitrogen gas or argon gas.

A thermoplastic resin sheet of the present invention is obtained by the aforementioned method of producing a thermoplastic resin sheet.

A thermoplastic resin foam sheet of the present invention is obtained by the aforementioned method of producing a thermoplastic resin foam sheet.

The thermoplastic resin foam sheet of the present invention has an expansion ratio of 1.5 to 10, and E (flexural modulus)/ρ (density) of 0.8 to 3.0 [MPa/(kg/m³)].

The thermoplastic resin foam sheet of the present invention has an expansion ratio of 3 to 5.

The thermoplastic resin foam sheet of the present invention has a thickness of 10 to 30 mm.

The thermoplastic resin foam sheet of the present invention has a width of 250 mm or more.

The thermoplastic resin foam sheet of the present invention is a plastic concrete panel or a scaffold plate.

A laminate sheet of the present invention comprises a skin material overlaid on at least one face of the aforementioned thermoplastic resin foam sheet.

In the laminate sheet of the present invention, the skin material is a thermoplastic resin sheet, nonwoven or woven fabric of organic or inorganic fiber, a fiber reinforced thermoplastic resin sheet, or a metal sheet.

The laminate sheet of the present invention is a plastic concrete panel or a scaffold plate.

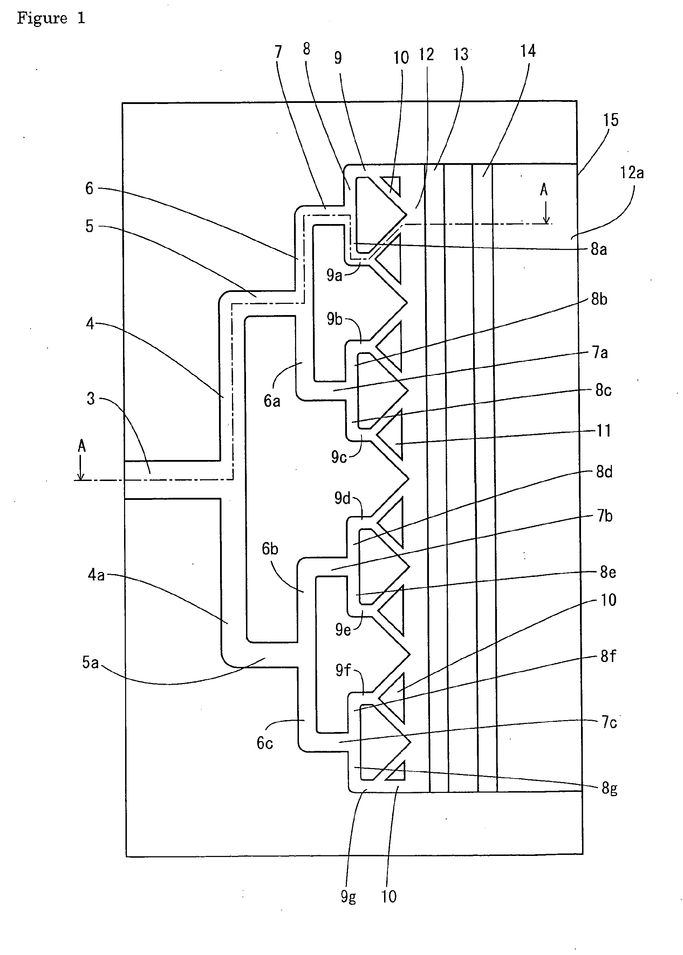

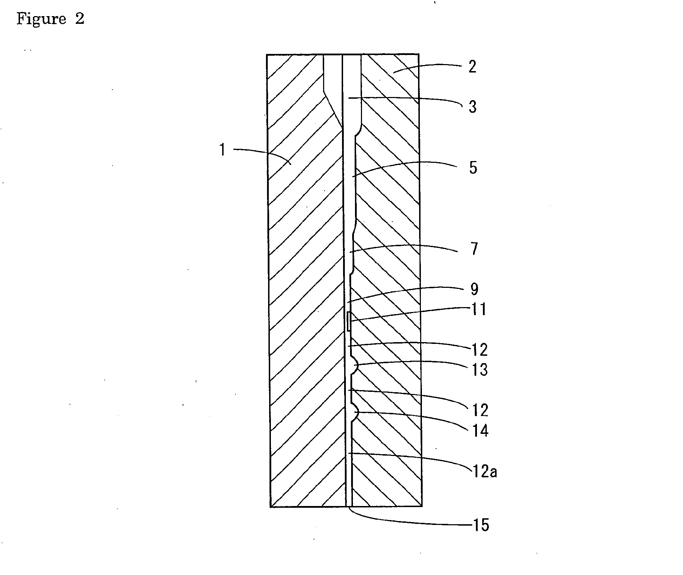

Next, an extrusion die of the present invention will be explained with reference to the drawings. Fig. 1 is an explanatory plan view showing one example of an extrusion die of the present invention, and Fig. 2 is a sectional view taken along a line A-A in Fig. 1.

In Figs, 1 denotes an upper extrusion die having a substantially rectangular shape in planar view, and 2 denotes a lower extrusion die having a substantially rectangular shape in planar view, and by overlapping the upper extrusion die 1 and the lower extrusion die 2, an extrusion die having a substantially rectangular shape in planar view is formed.

In a center part of the width direction of the upper extrusion die 1 and the lower extrusion die 2, a first resin path 3 extends in the flow direction of a thermoplastic resin from ends of the upper extrusion die 1 and the lower extrusion die 2.

The lower extrusion die 2 is formed with second resin paths 4 and 4a extending symmetrically in the width direction from a distal end of the first resin path 3, and formed with third resin paths 5 and 5a which extend in the flow direction of the thermoplastic resin from distal ends of the second resin paths 4 and 4a so as to be symmetric about the first resin path 3.

On the other hand, the lower extrusion die 2 is formed with fourth resin paths 6, 6a, 6b and 6c which symmetrically extend in the width direction from distal ends of the third resin paths 5 and 5a, and formed with fifth resin paths 7, 7a, 7b and 7c which extend in the flow direction of the thermoplastic resin from distal ends of the fourth resin paths 6, 6a, 6b and 6c so as to be symmetric about the third resin paths 5 and 5a.

The fourth resin paths 6 and 6a, the fifth resin paths 7 and 7a, the fourth resin paths 6b and 6c, and the fifth resin paths 7b and 7c are respectively formed symmetrically about the first resin path 3.

Further, the lower extrusion die 2 is formed with sixth resin paths 8, 8a, 8b, 8c, 8d, 8e, 8f and 8g symmetrically extending in the width direction from distal ends of the fifth resin paths 7, 7a, 7b and 7c, and formed with seventh resin paths 9 and 9a, 9b and 9c, 9d and 9e, and 9f and 9g which extend in the flow direction of the thermoplastic resin from distal ends of sixth resin paths 8, 8a, 8b, 8c, 8d, 8e, 8f and 8g so as to be symmetric about the fifth resin paths 7, 7a, 7b and 7c, respectively.

The sixth resin paths 8 and 8a and the seventh resin paths 9 and 9a, as well as the sixth resin paths 8b and 8c and the seventh resin paths 9b and 9c are formed symmetrically about the third resin paths 5, and the sixth resin paths 8d and 8e and the seventh resin paths 9d and 9e, as well as the sixth resin paths 8f and 8g and the seventh resin paths 9f and 9g are formed symmetrically about the third resin paths 5a.

Further, the sixth resin paths 8, 8a, 8b and 8c and the seventh resin paths 9, 9a, 9b and 9c, as well as the sixth resin paths 8d, 8e, 8f and 8g and the seventh resin paths 9d, 9e, 9f and 9g are formed symmetrically about the first resin path 3.

Diameters of the resin paths 3, 4, 5, 6, 7, 8 and 9 are not particularly limited, however, since the first resin path 3 branches into the second resin paths 4, the third resin path 5 branches into the fourth resin paths 6, and the fifth resin path 7 branches into the sixth resin paths 8, it is preferred that the diameter of the first resin path 3 is larger than that of the second resin path 4, the diameter of the third resin path 5 is larger than that of the fourth resin paths 6, and the diameter of the fifth resin path 7 is larger than that of the sixth resin path 8.

Further, since the second resin path 4 does not branch into the third resin path 5, the fourth resin path 6 does not branches into the fifth resin path 7, and the sixth resin path 8 does not branch into the seventh resin path 9, these paths preferably have substantially identical diameters, and hence it is preferred that the diameters of the resin paths 3, 4, 5, 6, 7, 8 and 9 gradually reduce as a whole in the flow direction of the thermoplastic resin.

When a thermoplastic resin is supplied from the resin paths in the width direction (i.e., second resin path 4, fourth resin path 6 and sixth resin path 8) to the resin paths in the flow direction of the thermoplastic resin (i.e., third resin path 5, fifth resin path 7 and seventh resin path 9), the thermoplastic resin memorizes the flow in the flow direction (width direction of the extrusion die), and when supplied to the subsequent widthwise resin flow path, the thermoplastic resin tends to flow in the memorized flow direction unless the memory of flow is deleted during the period in which the thermoplastic resin retains in the resin path in the flow direction.

Therefore, a resin path in the flow direction of the thermoplastic resin preferably has a length which is 1.2 times or more, more preferably 1.5 times or more of the diameter of the previous widthwise resin path so that the memory of flow in the flow direction of the thermoplastic resin (width direction of the extrusion die) may be deleted within the resin path along the flow direction of the thermoplastic resin.

To outlets of the seventh resin paths 9, 9a, 9b, 9c, 9d, 9e, 9f and 9g, coathanger-like expanding parts 10, 10, ... having a substantially isosceles triangle shape in planar view are connected, respectively, and the expanding parts 10, 10, ... are connected to a broad resin path 12 having a width of a sheet to be produced.

In a generally center part of the coathanger-like expanding part 10, 10, ..., there are formed projection parts 11, 11, ... of a generally isosceles triangle which is planarly homologous to the expanding part 10 and having a smaller depth than the expanding part 10. The thermoplastic resin supplied from the seventh resin paths 9, 9a, 9b, 9c, 9d, 9e, 9f and 9g is expanded into the left and right of the expanding part 10, while being supplied to the resin path 12 over the projection part 11.

The width of the outlet of the expanding part 10 is preferably 100 mm or less, and more preferably 50 mm or less because too large width makes it difficult to uniformize pressure distribution and flow rate distribution.

The expanding angle of the expanding part 10 is preferably within 160 degrees, more preferably within 100 degrees, and further preferably in the range of 60 to 90 degrees because too large angle makes it difficult to achieve uniform flow of thermoplastic resin in both ends of the expanding p art.

The broad resin path 12 is connected to a lip 15 for extruding the thermoplastic resin while intervened by resin pools 13, 14 having a semicircular cross section.

The thermoplastic resin supplied to the broad resin path 12 is uniformized in the width direction, however, there may be some difference in flow rate of the flow direction, so that it is preferred to provide at least one resin pool so as to reduce the difference in flow rate, achieve uniformity in the width direction and reduce an weld.

The size and number of the resin pools may be appropriately determined depending on the extrusion die, however, twice or more of the volume of the expanding part 10 is preferred because the time during which the thermoplastic resin retains in the resin pool is extended, and the difference in flow rate in the width direction is mitigated and uniformized in the width direction.

Preferably, the length in the flow direction of the resin path 12a between the downstream resin pool 14 to the lip 15 is such that the resin pressure (back pressure) of the width direction in the resin pool 14 is uniform, and it is preferably one-tenth to three-tenths of the width of the lip 15 because too small length in the flow direction of the resin path 12a makes the resin pressure of the width direction difficult to be uniform, and too large length makes the molding difficult due to too high resin pressure.

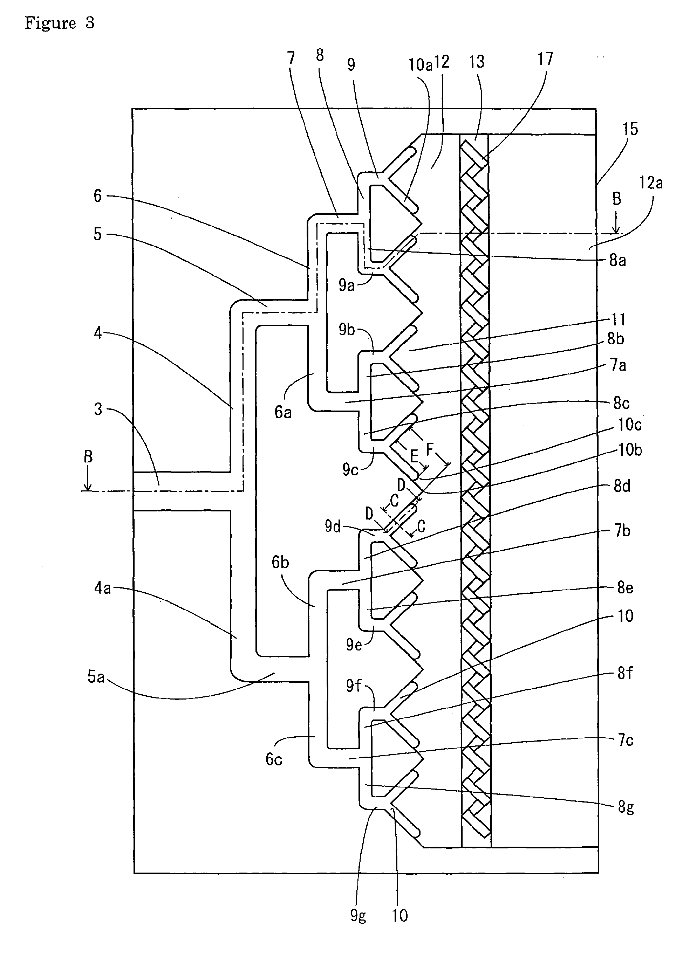

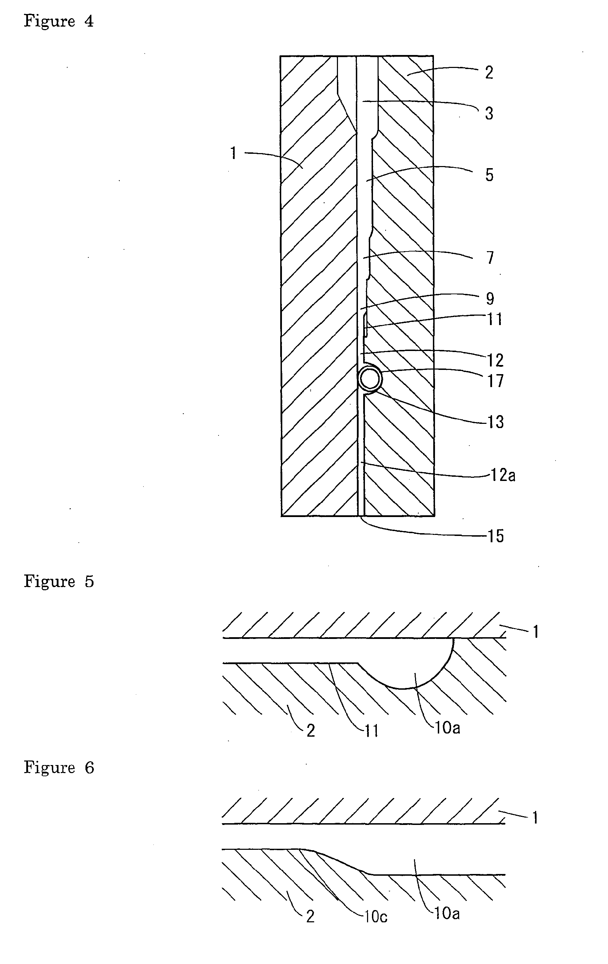

Next, another form of an extrusion die of the present invention will be explained. Fig. 3 is a plan explanatory view showing one example of another form of an extrusion die of the present invention, Fig. 4 shows a cross section taken along a line B-B in Fig. 3, Fig. 5 shows a cross section taken along a line C-C in Fig. 3, and Fig. 6 shows a cross section taken along a line D-D in Fig. 3.

In the following, explanation will be given for different points from those of the extrusion die shown in Figs. 1 and 2. In Figs. 3 to 6, the part identical to that in Figs. 1 and 2 is denoted by the identical symbol.

To outlets of the seventh resin paths 9, 9a, 9b, 9c, 9d, 9e, 9f and 9g, coathanger-like expanding parts 10, 10, ... having a substantially isosceles triangle shape in planar view are connected, respectively, and the expanding parts 10, 10, ... are connected to the broad resin path 12 having a width of a sheet to be produced.

In a generally center part of the coathanger-like expanding part 10, 10, ..., there are formed projection parts 11, 11, ... of a generally isosceles triangle shape which is planarly homologous to the expanding part 10 and having a height which is appropriately the same with the bottom face of the resin path 12, and as shown in Fig. 5, auxiliary paths 10a and 10a in the form of a recess groove which is deeper than the projection part 11 are formed on the left and right parts of the projection part 11.

Therefore, the thermoplastic resin supplied from the seventh resin paths 9, 9a, 9b, 9c, 9d, 9e, 9f and 9g is securely expanded into the left and the right of the expanding part 10 by means of the auxiliary paths 10a and 10a, while supplied into the resin path 12 over the projection part 11, so that the flow amount and flow rate of the thermoplastic resin are extremely uniformized.

A length E of the auxiliary path 10a is not particularly limited, however, it is preferably two-thirds to four-fifths of a distance F from the outlet of the upstream resin path 9 to an abutment part 10b with the adjacent expanding part 10 because the flow amount and flow rate of the thermoplastic resin are more likely to be uniformized.

As shown in Fig. 6, preferably, the cross section shape of an terminal part 10c of the flow path of the auxiliary path 10a is a smoothly inclined shape because fluidity in the left and right of the expanding part 10 is improved.

In Fig. 3, only one resin pool 13 is provided, and the resin pool 13 is provided with turbulence generating means 17 for mitigating the difference in flow rate in the width direction of the thermoplastic resin and uniformizing in the width direction.

The turbulence generating means is not particularly limited insofar as it is able to grant turbulence to the thermoplastic resin, and examples of such means include a coil spring, a breaker having a number of fine pores, a rotor equipped with a number of shear blades or stirring blades, and a slit plate formed with a number of slits, with a coil spring being preferred because of its simplicity and low cost.

The shape of the coil spring is not particularly limited, however it is preferably provided along the overall width of the width direction for secure generation of turbulence in the width direction. The coil spring preferably has such an outer diameter that comes into abutment with the upper and lower extrusion dies in the resin pool, and a coil pitch is preferably about ±10% of the outer diameter because good balance of resin flow is realized.

An extrusion molding apparatus of the present invention comprises the aforementioned extrusion die connected to a uniaxial or a biaxial extruder.

The uniaxial or biaxial extruder is not particularly limited insofar as it is a uniaxial or a biaxial extruder commonly used in extrusion molding.

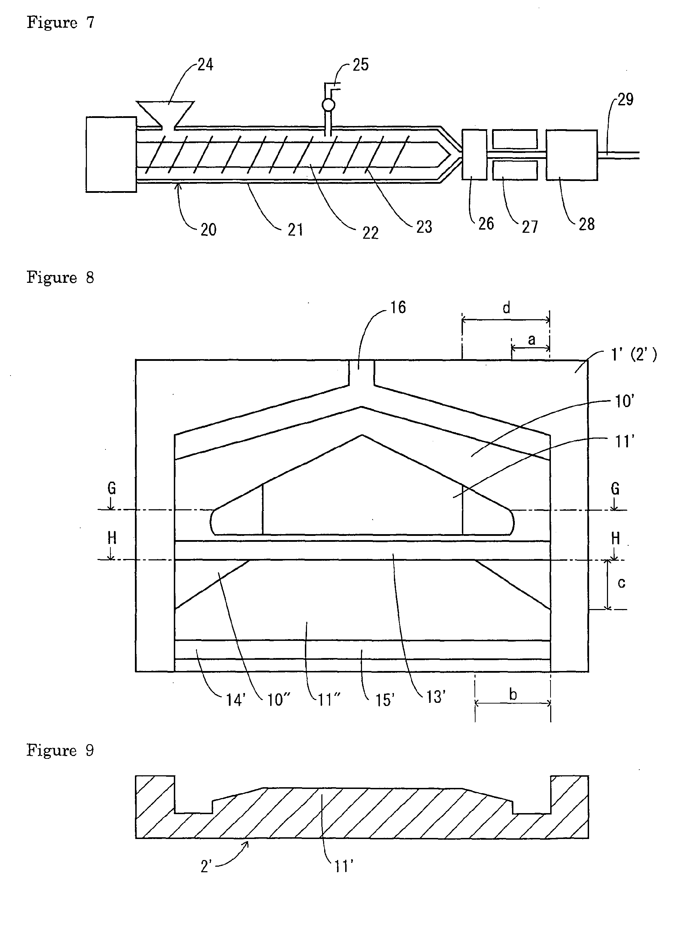

Next, the extrusion molding apparatus of the present invention will be explained with reference to the drawings. Fig. 7 is an explanatory view of one example of the extrusion molding apparatus of the present invention.

In Fig. 7, 20 denotes an extruder which includes a cylinder 21 and a screw 22 having screw flight 23 accommodated in the cylinder 21, and the cylinder 21 is provided with a resin supply hopper 24 and a gas injection nozzle 25.

In a position posterior to 60% position from the position of the resin supply hopper 24 of the screw flight 23, the supplied thermoplastic resin does not completely melt, and hence both a melted resin and an unmelted resin are present, so that there is a fear that the supplied inorganic gas fails to be uniformly reinforced in the thermoplastic resin and variation in reinforced amount may occur. Further, if the gas injection nozzle 25 is disposed in a position anterior to 70% position, a time and distance for impregnation of the inorganic gas into the thermoplastic resin are insufficient, variation in foaming may occur at the time of ejection.

Therefore, the gas injection nozzle 25 is preferably disposed in a position of 60% to 70% from the position of the resin supply hopper 24 of the screw flight 23.

In order to stably inject inorganic gas into the melted thermoplastic resin, it is necessary to send the inorganic gas into the melted thermoplastic resin at a pressure that exceeds the resin pressure exerted on a gas injection outlet of the gas injection nozzle 25, and the larger the inner diameter of the gas injection outlet, the higher the gas pressure required for injection of the same amount of the gas, and a large burden is exerted on the equipment. Raising the gas pressure may allow stable supply, however, this measure requires an increased gas amount and hence limits the range where an appropriate amount of gas is stably supplied. Therefore, the inner diameter of the gas injection outlet is preferably 2.0 mm or less, and more preferably 1.6 mm or less.

In order to efficiently and uniformly impregnate the inorganic gas into the melted thermoplastic resin, it is preferred that the inorganic gas is directly injected into the melted thermoplastic resin in a position much closer to the screw. Therefore, the gas injection outlet of the gas injection nozzle 25 is disposed preferably at a position inward from an inner wall of the cylinder 21 by 1 mm or more. In particular, the gas injection outlet (nozzle distal end) of the gas injection nozzle 25 preferably projects into the interior of the cylinder at a maximum as far as it does not strike on the screw.

The extruder 20 is connected to the extrusion die 26, and on its downstream side, an air-cooling device 27 and a cooling sizing device 28 are disposed. Extrusion foaming under cooling immediately after extrusion makes the foamed cells be confined in the interior, and a foam sheet having a skin layer and exhibiting excellent mechanical strength can be obtained. 29 denotes a thermoplastic resin foam sheet obtained by extrusion foaming.

The air-cooling device 27 may be any well-known device insofar as it is able to cool the surface of the thermoplastic resin foam sheet 29 by spraying air to the extrusion-foamed thermoplastic resin foam sheet 29, and for example, a device that sprays air at an interval of 5 to 50 mm from both surfaces of the thermoplastic resin foam sheet 29 and has a plurality of air outlets of 2 mm or less in diameter arranged at an interval of 5 to 20 mm is preferred.

The cooling sizing device 28 may also be any well-known device insofar as it is able to cool the thermoplastic resin foam sheet 29 while fixing the shape, and for example, a device capable of indirectly cooling the thermoplastic resin foam sheet 29 by circulation of chilled water is preferred.

A method of producing a thermoplastic resin sheet of the present invention comprises conducting extrusion molding while supplying a thermoplastic resin composition (1) to the extruder of the said extrusion molding apparatus.

To be more specific, a thermoplastic resin sheet is produced by supplying a thermoplastic resin composition (1) to the uniaxial or biaxial extruder of the extrusion molding apparatus and melting and extrusion molding the thermoplastic resin composition (1) by heating. Since the thermoplastic resin sheet does not foam, the gas injection nozzle may be omitted.

The thermoplastic resin composition (1) is a composition which includes only a thermoplastic resin, or additionally includes additives commonly used in thermal molding of a thermoplastic resin such as a thermal stabilizer, a plasticizer, an inorganic filler, a phenolic antioxidant, a hindered amine-based light stabilizer, a benzophenone-based or triazole-based UV absorber and the like.

As the thermoplastic resin, any thermoplastic resins that are commonly used in extrusion molding may be used without any limitation, and examples of such thermoplastic resins include polyolefinic resins such as polyethylenes such as low-density polyethylene, high-density polyethylene and straight-chain low-density polyethylene; polypropylenes such as homo-type polypropylene, random-type polypropylene and block-type polypropylene; polybuthene, ethylene-propylene copolymer, ethylene-propylene-diene ternary copolymer, ethylene-buthene copolymer, ethylene-vinyl acetate copolymer and ethylene-(meth)acrylic acid ester copolymer; polyvinyl chloride resins such as polyvinyl chloride, chlorinated polyvinyl chloride and vinyl chloride-vinyl acetate copolymer; polystyrene resins, polyester resins, acrylic resins, ABS resins, polyacetale resins, polycarbonate resins, polybutylene terephthalate resins, and polyphenylene ether resins.

The aforementioned thermal stabilizer is not particularly limited insofar as it is a thermal stabilizer generally used in molding of thermoplastic resin, and examples of such thermal stabilizer include lead-based stabilizers such as lead stearate, dibasic lead phosphite and tribasic lead sulfate; calcium-zinc-based stabilizers, barium-zinc-based stabilizer, barium-cadmium-based stabilizer; and organic tin-based stabilizers such as dialkyl tin maleate, dialkyl tin bis(monoalkyl maleate), dibutyl tin maleate polymer, dialkyl tin laurate, dialkyl tin mercapto, dialkyl tin bis(mercapto fatty acid ester), dialkyl tin sulfide, and dioctyl tin maleate polymer, and these may be used singly or in combination of two or more kinds.

As the plasticizer, any plasticizers that are generally used in molding of thermoplastic resin may be used without any limitation, and examples of such plasticizers include esters of acid such as phthalic acid, sebacic acid, citric acid or phosphoric acid, e.g., dibutyl phthalate, di-2-ethylhexyl phthalate, di-2-ethylhexyl adipate and the like, and epoxy soybean oil, which may be used singly or in combination of two or more kinds.

As the filler, any fillers that are generally used in production of a vinyl chloride-based resin molded article may be used without any limitation, and examples of such fillers include calcium carbonate, magnesium carbonate, aluminum oxide, magnesium oxide, titanium oxide, magnesium hydroxide, talc, mica, clay, montmorillonite, bentonite, fly ash and the like. These may be used singly or in combination of two or more kinds.

As the phenolic antioxidant, any phenolic antioxidants that are generally used in molding of thermoplastic resin may be used without any limitation, and examples of such phenolic antioxidants include pentaerythritol tetrakis[3-(3,5-di-tert-butyl-4-hydroxyphenyl)propionate], octadecyl-3-(3,5-di-tert-butyl-4-hydroxyphenyl)propionate, ethylenebis(oxyethylene)bis[3-(5-tert-butyl-4-hydroxy-m-tolyl)propionate] and the like. These may be used singly or in combination of two or more kinds.

As the hindered amine-based light stabilizer, any hindered amine-based light stabilizers that are generally used in molding of a thermoplastic resin may be used without any limitation, and examples of such hindered amine-based light stabilizers include bis(2,2,6,6-tetramethyl-4-piperidyl)sebacate, and a reaction product of decanedioic(2,2,6,6-tetramethyl-1(octyloxy)-4-piperidinyl) ester, 1,1-dimethylethylhydroperoxide and octane. These may be used singly or in combination of two or more kinds.

A method of producing a thermoplastic resin foam sheet of the present invention comprises conducting extrusion molding while supplying a thermoplastic resin composition (2), which includes a thermoplastic resin and a thermo-decomposable chemical foaming agent, to the extruder of the said extrusion molding apparatus.

To be more specific, a thermoplastic resin foam sheet is produced by supplying a thermoplastic resin composition (2) to the uniaxial or biaxial extruder of the extrusion molding apparatus and melting and extrusion foam molding the thermoplastic resin composition (2) by heating.

A thermoplastic resin foam sheet may be produced by conducting extrusion molding at a temperature lower than a temperature at which the thermo-decomposable chemical foaming agent decomposes to obtain a thermoplastic resin sheet, and heating the obtained thermoplastic resin sheet at a temperature higher than a temperature at which the thermo-decomposable chemical foaming agent decomposes. Since the thermo-decomposable chemical foaming agent is used as a foaming agent, the gas injection nozzle may be omitted.

The thermoplastic resin composition (2) includes the aforementioned thermoplastic resin and a thermo-decomposable chemical foaming agent, and may optionally include an additive as recited above.

Examples of the thermo-decomposable chemical foaming agent include azo compounds such as azodicarbonamide, azobisisobutylonitrile, and barium azo carboxylate; hydrazide compounds such as benzene sulfonyl hydrazide, p-toluene sulfonyl hydrazide, and 4,4-oxybis(benzenesulfonyl hydrazide); nitroso compounds such as dinitroso pentamethylene tetramine; semicarbazide compounds, hydrazo compounds, tetrazole compounds, ester compounds, dicarbonates, carbonates, and nitrites.

A method of producing a thermoplastic resin foam sheet of the present invention comprises conducting extrusion molding while supplying a thermoplastic resin composition (3), which includes a thermoplastic resin and a physical foaming agent, to the extruder of the said extrusion molding apparatus.

To be more specific, a thermoplastic resin foam sheet is produced by supplying a thermoplastic resin composition (3) to the uniaxial or biaxial extruder of the extrusion molding apparatus and melting and extrusion foam molding the thermoplastic resin composition (3) by heating.

The thermoplastic resin composition (3) includes the aforementioned thermoplastic resin and a physical foaming agent, and may optionally include an additive as recited above.

Examples of the physical foaming agent include inorganic gases such as carbon dioxide gas, nitrogen gas and argon gas; propane, butane and low-boiling-point alcohol.

When inorganic gas is used as the physical foaming agent, it is preferred that the thermoplastic resin composition is supplied to a uniaxial or biaxial extruder of the extrusion molding apparatus and the thermoplastic resin is melted and kneaded by heating, while an inorganic gas is injected under pressure through the gas injection nozzle to achieve extrusion foam molding.

Since the thermoplastic resin sheet of the present invention is a thermoplastic resin sheet which is produced by a method of producing a thermoplastic resin sheet in which extrusion molding is achieved by supplying a thermoplastic resin to the extruder of the extrusion molding apparatus to which the aforementioned extrusion die is connected, it has uniform thickness both in width direction and thickness direction even if it is a broad sheet.

Since the thermoplastic resin foam sheet of the present invention is a thermoplastic resin foam sheet which is produced by a method of producing a thermoplastic resin foam sheet in which extrusion molding is achieved by supplying a thermoplastic resin to the extruder of the extrusion molding apparatus to which the aforementioned extrusion die is connected, it has uniform thickness and expansion ratio in both width and thickness directions even if it is a broad sheet.

Furthermore, since the thermoplastic resin foam sheet that is produced by a method of producing a thermoplastic resin foam sheet of the present invention is foamed by a physical foaming agent, and cells of the thermoplastic resin foam sheet whose surface is cooled and sized by the air-cooling device and/or the cooling sizing device immediately after extrusion foaming, are confined in the interior, and a skin layer which is non-foamed or lowly foamed is formed in the surface, excellent mechanical strength, rigidity and surface property are achieved.

In particular, when the physical foaming agent is inorganic gas such as carbon dioxide gas, nitrogen gas or argon gas, the cells are long in the thickness direction (namely, longitudinal rib structure), and the diameter of the cells is large and the cell wall is thick, so that more excellent mechanical strength, rigidity and surface property are realized.

When the thermoplastic resin foam sheet is used as a structural material such as plastic concrete panel or scaffold plate for which light weight, excellent mechanical strength and rigidity are required, the expansion ratio is preferably 1.5 to 10 and E (flexural modulus)/ρ (density) is preferably 0.8 to 3.0 [MPa/(kg/m³)].
In the present invention, the flexural modulus was measured in conformance with the JIS K7221-2 (ISO 1209-2).

The expansion ratio is preferably 1.5 to 10, more preferably 3 to 5 and still preferably 3 to 4 because smaller expansion ratios will increase the weight and larger expansion ratios will deteriorate mechanical strength and rigidity.

E (flexural modulus)/ρ (density) is preferably in the range of 0.8 to 3.0 [MPa/(kg/m³)] because smaller and larger values will deteriorate mechanical strength and rigidity and larger values will make production difficult.

The thickness of the thermoplastic resin foam sheet is not particularly limited, however it is preferably in the range of 10 to 30 mm for achieving the aforementioned physical properties.

Further, since extrusion molding is conducted using the extrusion die of the present invention, a broad thermoplastic resin foam sheet having a width of 250 mm or more is obtained, and the obtained thermoplastic resin foam sheet is light in weight and excellent in mechanical strength and rigidity.

Therefore, the aforementioned thermoplastic resin foam sheet is desirably used as a structural material such as a plastic concrete panel or a scaffold plate.

A skin material may be overlaid on either or both faces of the aforementioned thermoplastic resin foam sheet for enhancement and improvement of surface property of thermoplastic resin foam sheet.

As the skin material, any sheets well-known in the art may be used, and examples of such sheets include the thermoplastic resin sheets as described above; nonwoven or woven fabric comprising organic fiber such as cotton fiber, staple fiber, polyethylene fiber, polypropyrene fiber, polyester fiber, nylon fiber, vinylon fiber and acrylic fiber, or inorganic fibers such as glass fiber and carbon fiber; fiber reinforced thermoplastic resin sheets to which the aforementioned organic fibers or inorganic fibers are dispersed and reinforced; metal sheets such as aluminum, steel, and the like; metal laths or metal meshes of iron and the like; ceramic sheets and paper and the like, with thermoplastic resin sheets, nonwoven fabric of organic fiber or inorganic fiber, fiber reinforced thermoplastic resin sheets or woven fabrics and metal sheets being preferred.

### EFFECTS OF THE INVENTION

Since the extrusion die of the present invention comprises the resin path branched plural times symmetrically in the flow direction of thermoplastic resin, when a thermoplastic resin, in particular, a thermoplastic resin containing a foaming agent is extruded to produce a sheet, it is possible to readily uniformize the flow rate and pressure distribution of the thermoplastic resin in the width and thickness directions of the thermoplastic resin, and to readily accept expansion/contraction in the width and thickness directions of the sheet. Further, the extrusion die can be easily produced and is inexpensive.

Since the coathanger-like expanding part is connected to an outlet of branched resin path of the extrusion die, the thermoplastic resin supplied from the outlet of the branched resin path expands in the shape of coathanger, and is extruded while being in contact with the thermoplastic resin extruded from the adjacent coathanger-like expanding part, so that a thermoplastic resin sheet and a thermoplastic resin foam sheet accompanied with little weld line is readily obtained.

When auxiliary paths of a recess groove shape are formed on the left and right of the expanding part, the thermoplastic resin supplied from the seventh resin path is securely expanded on the left and the right sides of the expanding part by the auxiliary paths, so that the flow amount and flow rate of the thermoplastic resin are significantly uniformized, and especially when the length of the auxiliary path is two-thirds to four-fifths of the distance from the outlet part of the upstream resin path to the abutment part with the adjacent expanding part, the flow amount and flow rate of the thermoplastic resin are uniformized, so that a thermoplastic resin sheet and a thermoplastic resin foam sheet having uniform width and thickness of the sheet can be easily obtained.

Since at least one resin pool is provided on the downstream side of the outlet of the branched resin path of the extrusion die, the thermoplastic resin supplied from the outlet of the branched resin path is temporarily retained in the resin pool, so that the left and right outlet flow rates of the thermoplastic resin can be made uniform in the width direction. When a turbulence generator is further provided in the resin pool, the left and right outlet velocities of the thermoplastic resin can be made more uniform in the width direction, so that a thermoplastic resin sheet and a thermoplastic resin foam sheet accompanied with little weld line is readily obtained.

Since the extrusion molding apparatus of the present invention comprises the extrusion die connected to a uniaxial or biaxial extruder, it is possible to readily obtain a thermoplastic resin sheet and a thermoplastic resin foam sheet having uniform width and thickness of sheet and little weld line.

Further, when an air-cooling device and/or a cooling sizing device is disposed on the downstream side of the extrusion die, by conducting extrusion foaming under cooling immediately after extrusion, it is possible to obtain a foam sheet having a skin layer and excellent mechanical strength in which foamed cells are confined in the interior.

When the uniaxial or biaxial extruder includes a cylinder, a resin supply hopper and a gas injection nozzle provided for the cylinder, and a screw having a screw flight accommodated in the cylinder, and the gas injection nozzle has an inner diameter of 2.0 mm or less, and a gas injection outlet of the gas injection nozzle is disposed in a position of 60% to 70% from the position of the resin supply hopper of the screw flight so that it is in a position inward from the cylinder by 1 mm or more, it is possible to stably inject inorganic gas to the uniformly melted thermoplastic resin, and thus it is possible to stably obtain a foam sheet having excellent mechanical strength in which foamed cells are confined in the interior.

In a method of producing a thermoplastic resin sheet of the present invention, since extrusion molding is conducted while supplying a thermoplastic resin to the uniaxial or biaxial extruder which is connected to the extrusion die, it is possible to obtain a broad thermoplastic resin sheet having uniform thicknesses in the width and thickness directions.

In a method of producing a thermoplastic resin foam sheet of the present invention, since extrusion molding is conducted while supplying a foaming thermoplastic resin composition to the uniaxial or biaxial extruder to which the extrusion die is connected, it is possible to obtain a broad thermoplastic resin foam sheet having uniform thicknesses in the width and thickness directions.

Therefore, the thermoplastic resin sheet of the present invention is a broad sheet having uniform thicknesses in the width and thickness directions. Further, the thermoplastic resin foam sheet of the present invention has uniform thicknesses in the width and thickness directions and has uniform expansion ratio even if it is a broad sheet.

Further, in a thermoplastic resin foam sheet that is foamed by a physical foaming agent and having a surface that is cooled and/or sized by the air-cooling device and/or the cooling sizing device immediately after extrusion foaming, cells are confined in the interior, and an un-foamed or low-foamed surface layer is formed on the surface, so that excellent mechanical strength, rigidity and surface property are realized.

In particular, when the physical foaming agent is inorganic gas such as carbon dioxide gas, nitrogen gas, argon gas and the like, cells form a longitudinal rib structure along the thickness direction, and diameter of the cells increases and thickness of the cell wall increases, so that more excellent mechanical strength, rigidity, surface property and the like are realized.

The aforementioned thermoplastic resin foam sheet having an expansion ratio of 1.5 to 10, and E (flexural modulus)/ρ (density) in the range of 0.8 to 3.0 [MPa/(kg/m³)] is desirably used as a structural material such as a plastic concrete panel or a scaffold plate for which light weight and excellent mechanical strength and rigidity are required.

Since a laminate sheet in which a skin material is overlaid on either or both face of the thermoplastic resin foam sheet has excellent mechanical strength, rigidity and surface property, it is desirably used as a structural material such as a plastic concrete panel or a scaffold plate.

### BRIEF DESCRIPTION OF THE DRAWINGS

Fig. 1 is a plan explanatory view showing one exemplary embodiment of an extrusion die of the present invention.
Fig. 2 is a sectional view taken along a line A-A in Fig. 1.
Fig. 3 is a plan explanatory view showing another exemplary embodiment of an extrusion die of the present invention.
Fig. 4 is a sectional view taken along a line B-B in Fig. 3.
Fig. 5 is a sectional view taken along a line C-C in Fig. 3.
Fig. 6 is a sectional view taken along a line D-D in Fig. 3.
Fig. 7 is an explanatory view showing one exemplary embodiment of an extrusion molding apparatus of the present invention.
Fig. 8 is a plan explanatory view showing a coathanger-like extrusion die used in Comparative Example 1.
Fig. 9 is a sectional view taken along a line E-E in Fig. 3.
Fig. 10 is a sectional view taken along a line F-F in Fig. 3.

### EXPLANATION OF SYMBOLS

- 1: Upper extrusion die
- 2: Lower extrusion die
- 3: First resin path
- 4: Second resin path
- 5: Third resin path
- 6: Fourth resin path
- 7: Fifth resin path
- 8: Sixth resin path
- 9: Seventh resin path
- 10: Expanding part
- 10a: Auxiliary flow path
- 10b: Abutment part
- 10c: Terminal part
- 11: Projection part
- 12, 12a: Broad resin path
- 13, 14: Resin pool
- 15: Lip
- 17: Turbulence generating means
- 20: Extruder
- 21: Cylinder
- 22: Screw
- 23: Screw flight
- 24: Resin supply hopper
- 25: Gas injection nozzle
- 26: Extrusion die
- 27: Air-cooling device
- 28: Cooling sizing device
- 29: Thermoplastic resin foam sheet

### BEST MODE FOR CARRYING OUT THE INVENTION

In the following, the present invention will be concretely explained by providing examples and comparative examples. It is to be noted that the present invention is not limited to these examples.

### (Example 1)

Polypropylene ("Novatech PPMA" (product name) made by Japan Polychem Corporation) was supplied to a biaxial extruder ("BT-50" (product name) manufactured by Research Laboratory of Plastics Technology Co., Ltd.) provided with the extrusion die shown in Fig. 1 and Fig. 2, and extruded at a screw rotation speed of 32 rpm in an extrusion amount of 16 kg/hour while the barrel temperature was adjusted so that polypropylene temperature at the extruder outlet was 187°C, to obtain a polypropylene sheet. On the downstream side of the extrusion die, a cooling sizing device was disposed, and the extrude polypropylene sheet was picked up under cooling by the cooling sizing device.

The extrusion die included the following dimensions and the like.
An inlet of a first resin path 3 has a profile of circle measuring 30 mm in diameter.
A second resin path 4 has a profile of semicircle measuring 22 mm in diameter, and a length (from the upper end to the lower end in Fig. 1) of 210.56 mm

A third resin path 5 has a profile of semicircle measuring 22 mm in diameter, and a length (from the downstream end of the second resin path 4 to the upstream end of the fourth resin paths 6 in Fig. 1) of 33 mm.
A fourth resin path 6 has a profile of semicircle measuring 15 mm in diameter, and a length (from the upper end to the lower end in Fig. 1) of 99 mm.

A fifth resin path 7 has a profile of semicircle measuring 15 mm in diameter, and a length (from the downstream end of the fourth resin path 6 to the upstream end of the sixth resin paths 8 in Fig. 1) of 22. 5 mm.
A sixth resin path 8 has a profile of semicircle measuring 10 mm in diameter, and a length (from the upper end to the lower end in Fig. 1) of 52 mm.

A seventh resin path 9 has a profile of semicircle measuring 10 mm in diameter, and a length (from the downstream end of the fourth resin path 6 to the upstream end of the expanding part 10) of 16 mm.
An expanding part 10 is an isosceles right triangle in planar view, having angle of 90 degrees and a depth of 5 mm.

A projection part 11 is an isosceles right triangle in planar view, having an upstream angle of 90 degrees and a height of 3 mm.
Each of resin pools 13, 14 has a profile of a generally semicircle of 10 mm in diameter.
A resin path 12a has a length of 40 mm in the flow direction.
A lip 15 has a width of 300 mm and a clearance of 1.2 mm.

The obtained propylene sheet had a width of 300 mm, and an average thickness of 1.5 mm with standard deviation of 0.07 mm when the thickness was measured at 14 points at 4 mm interval from the position of 50 mm from the end toward the center part. When the thickness was measured at 14 points at 4 mm interval toward the left and the right from the center part of the polypropylene sheet, the average thickness was 1.3 mm with a standard deviation of 0.04 mm.

### (Comparative Example 1)

A polypropylene sheet was obtained in the same manner as Example 1 except that a coathanger-like extrusion die was used instead of the extrusion die shown in Figs. 1 and 2.

The obtained propylene sheet has a width of 300 mm, and an average thickness of 0.8 mm with standard deviation of 0.17 mm when the thickness was measured at 14 points at 4 mm interval from the position of 50 mm from the end toward the center part. When the thickness was measured at 14 points at 4 mm interval toward the left and the right from the center part of the polypropylene sheet, the average thickness was 1.4 mm with a standard deviation of 0.04 mm.

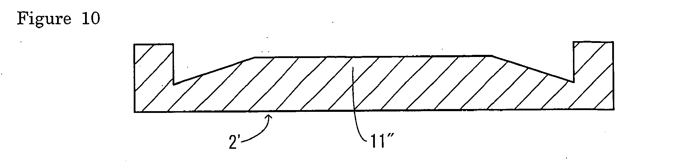

The aforementioned coathanger-like extrusion die is shown in Figs. 8 to 10. Fig. 8 is a plan explanatory view of a coathanger-like extrusion die, Fig. 9 is a sectional view taken along a line G-G in Fig. 8, and Fig. 10 is a sectional view taken along a line H-H in Fig. 8.

In the center along the width direction of the upper extrusion die 1' and the lower extrusion die 2', a resin path 16 is formed in the flow direction of the thermoplastic resin from ends of the upper extrusion die 1' and the lower extrusion die 2'.

A coathanger-like expanding part 10' is formed symmetrically from the tip end of the resin path 16, and a projection part 11' of general isosceles triangle is formed in the downstream extrusion die 2' in a substantial center of the expanding part 10'. Further, both ends in the width direction of the projection part 11' are designed to be gradually lower toward the ends, and a resin path is formed on both sides in the width direction of the projection part 11'.

On the downstream side of the projection part 11', a resin pool 13' is formed, followed by an expanding part 10" on its downstream side. The expanding part 10" is formed with a general trapezoidal projection part 11" in the lower extrusion die 2'. The parts in the vicinity of both ends (a part denoted by "a") in the width direction of the projection part 11" are designed to be gradually lower toward the ends, and to be higher toward downstream (a part denoted by "c").

On the downstream side of the expanding part 10", further formed is a resin pool 13" which is connected to a lip 15'.

The lip had a width of 300 mm and a clearance of 1.2 mm. In Fig. 8, the distance of "a" was 30 mm, the distance of "b" was 60 mm, the distance of "c" was 40 mm, and the distance of "d" was 70 mm.

### (Example 2)

100 parts by weight of polypropylene ("Novatech PPMA" (product name) made by Japan Polychem Corporation) and 0.1 part by weight of talc ("P talc" (product name) made by Takehara Kagaku Kogyo Co., Ltd.) were introduced into a Henschel mixer and mixed to give a polypropylene composition.

The obtained polypropylene composition was supplied to a biaxial extruder of an extrusion molding apparatus in which the extrusion die shown in Fig. 1 and Fig. 2 was connected to the biaxial extruder ("BT-50" (product name) manufactured by Research Laboratory of Plastics Technology Co., Ltd.), and after regulating the barrel temperature so that the temperature of polypropylene at a fusion part was 150°C, and the temperature of polypropylene at extruder outlet was 130°C, nitrogen gas was supplied from a nitrogen cylinder through a gas injection nozzle at an injection pressure of 6.0 MPa at a rate of 112g/hour (0.7 part by weight with respect to 100 parts by weight of the polypropylene composition), and extrusion foam molding was conducted at a screw rotation speed of 32 rpm in an extrusion amount of 16 kg/hour, to give a polypropylene foam sheet.

In the aforementioned biaxial extruder, a resin supply hopper and a gas injection nozzle were provided, and a gas injection outlet of the gas injection nozzle had an inner diameter of 1.6 mm, and the gas injection nozzle was disposed at a position of 65% of the screw flight from the side of the resin supply hopper so that the gas injection outlet projected by 5 mm from an inner wall of the cylinder.

On the downstream side of the extrusion die, a cooling sizing device having a clearance of 11 mm was provided, and the extruded polypropylene foam sheet was picked up under cooling by the cooling sizing device. The extrusion die was identical to that used in Example 1, and the lip had a width of 300 mm and a clearance of 1.2 mm.

The obtained polypropylene foam sheet was uniformly foamed to the ends, and had an average expansion ratio of 7.5. Also, the polypropylene foam sheet was rubbed under pressure by the cooling sizing device and had excellent surface property. In addition, little variation was observed in quality even the resin temperature, resin extrusion amount and pickup velocity changed more or less in extrusion foam molding, and stable extrusion foam molding was realized.

The obtained polypropylene foam sheet had a width of 310 mm, and when the thickness was measured at 26 points at 2 mm interval from the position of 10 mm from the end to the position of 60 mm toward the center, the average thickness was 11.9 mm with a standard deviation of 0.26 mm. Further when the thickness was measured at 26 points at 2 mm interval in the left and right direction from the center of the polypropylene sheet, the average thickness was 11.2 mm with a standard deviation of 0.18 mm.

The obtained polypropylene foam sheet had a flexural modulus E of 37 MPa and a density ρ of 120 kg/m³, and E/ρ was 0.308 [MPa/(kg/m³)].

### (Comparative Example 2)

A polypropylene foam sheet was obtained in the same manner as Example 2 except that a coathanger-like extrusion die used in Comparative Example 1 was used instead of the extrusion die shown in Figs. 1 and 2.

The obtained polypropylene foam sheet was not uniformly foamed, and had a width of 305 mm and an average expansion ratio of 5.3. The thickness of the polypropylene foam sheet was uneven and had rough surface because it was rubbed under pressure by the cooling sizing device.

When the thickness was measured at 26 points at 2 mm interval from the position of 10 mm from the end of the obtained polypropylene foam sheet to the position of 60 mm toward the center, the average thickness was 1.9 mm with a standard deviation of 0.08 mm. Further when the thickness was measured at 26 points at 2 mm interval in the left and right direction from the center of the polypropylene sheet, the average thickness was 10.6 mm with a standard deviation of 0.51 mm.

The obtained polypropylene foam sheet had a flexural modulus E of 40 MPa and a density ρ of 153 kg/m³, and E/ρ was 0.261 (MPa/(kg/m³)].
The flexural modulus E and the density ρ were shown by averages of measurements for samples prepared by separating the obtained polypropylene foam sheet into five parts along the width direction.

### (Example 3)

100 parts by weight of polypropylene ("Novatech PPMA" (product name) made by Japan Polychem Corporation) and 0.1 part by weight of talc ("P talc" (product name) made by Takehara Kagaku Kogyo Co., Ltd.) were introduced into a Henschel mixer and mixed to give a polypropylene composition.

The obtained polypropylene composition was supplied to a biaxial extruder of an extrusion molding apparatus in which the extrusion die shown in Fig. 1 and Fig. 2 was connected to the biaxial extruder ("BT-50" (product name) manufactured by Research Laboratory of Plastics Technology Co., Ltd.), and after regulating the barrel temperature so that the temperature of polypropylene at a fusion part was 150°C, and the temperature of polypropylene at an extruder outlet was 130°C, nitrogen gas was supplied from a nitrogen cylinder through a gas injection nozzle at an injection pressure of 6.0 MPa at a rate of 112 g/hour (0.7 part by weight with respect to 100 parts by weight of the polypropylene composition), and extrusion foam molding was conducted at a screw rotation speed of 32 rpm in an extrusion amount of 16 kg/hour, to give a polypropylene foam sheet.

In the aforementioned biaxial extruder, a resin supply hopper and a gas injection nozzle were provided, and a gas injection outlet of the gas injection nozzle had an inner diameter of 1.6 mm, and the gas injection nozzle was disposed at a position of 65% of the screw flight from the side of the resin supply hopper so that the gas injection outlet projected by 5 mm from an inner wall of the cylinder.

On the downstream side of the extrusion die, a cooling device and a cooling sizing device having a clearance of 20 mm were provided, and the extruded polypropylene foam sheet was picked up under cooling by the cooling device and the cooling sizing device.

The extrusion die was identical to that used in Example 1, and the lip had a width of 300 mm and a clearance of 6 mm.

The cooling device had nine air supply holes at 10 mm interval on an air supply surface of 35 x 35 mm, the air supply hole having a diameter of 1.5 mm, and the air supply surface was arranged above and below the polypropylene foam sheet so as to face with the same, and the sheet was cooled by spraying air at 10°C through the air supply holes at right angles to the polypropylene foam sheet at a rate of 1.5 L per one minute.

The obtained polypropylene foam sheet was uniformly foamed to the ends, and had an average expansion ratio of 3.5. Also, the polypropylene foam sheet was rubbed under pressure by the cooling sizing device and had excellent surface property. In addition, little variation was observed in quality even the resin temperature, the resin extrusion amount and the pickup velocity changed more or less in extrusion foam molding, and stable extrusion foam molding was realized.

The obtained polypropylene foam sheet had a width of 303 mm, and when the thickness was measured at 26 points at 2 mm interval from the position of 10 mm from the end to the position of 60 mm toward the center, the average thickness was 19.8 mm with a standard deviation of 0.34 mm. Further, when the thickness was measured at 26 points at 2 mm interval in the left and right direction from the center of the polypropylene foam sheet, the average thickness was 20.2 mm with a standard deviation of 0.30 mm.

The obtained polypropylene foam sheet had a flexural modulus E of 560 MPa and a density ρ of 270 kg/m³, and E/ρ was 2.074 [MPa/(kg/m³)].

### (Example 4)

Polypropylene ("Novatech PPMA" (product name) made by Japan Polychem Corporation) was supplied to a biaxial extruder ("BT-50" (product name) manufactured by Research Laboratory of Plastics Technology Co., Ltd.) provided with the extrusion die shown in Fig. 3 and Fig. 4, and extruded at a screw rotation speed of 32 rpm in an extrusion amount of 16 kg/hour while the barrel temperature was adjusted so that a polypropylene temperature at the extruder outlet was 187°C, to obtain a polypropylene sheet. The extruded polypropylene sheet was picked up by the cooling sizing device.

The extrusion die included the following dimensions and the like.
An inlet of a first resin path 3 has a profile of circle measuring 30 mm in diameter.
A second resin path 4 has a profile of semicircle measuring 22 mm in diameter, and a length (from the upper end to the lower end in Fig. 3) of 210.56 mm.

A third resin path 5 has a profile of semicircle measuring 22 mm in diameter, and a length (from the downstream end of the second resin path 4 to the upstream end of the fourth resin path 6 in Fig. 3) of 33 mm.
A fourth resin path 6 has a profile of semicircle measuring 15 mm in diameter, and a length (from the upper end to the lower end in Fig. 3) of 99 mm.

A fifth resin path 7 has a profile of semicircle measuring 15 mm in diameter, and a length (from the downstream end of the fourth resin path 6 to the upstream end of the sixth resin paths 8 in Fig. 3) of 22.5 mm.
A sixth resin path 8 has a profile of semicircle measuring 10 mm in diameter, and a length (from the upper end to the lower end in Fig. 3) of 52 mm.

A seventh resin path 9 has a profile of semicircle measuring 10 mm in diameter, and a length (from the downstream end of the fourth resin path 6 to the upstream end of the expanding part 10 in Fig. 3) of 16 mm.
An expanding part 10 has an expansion angle of 90 degrees and a depth of 5 mm.

An auxiliary flow path 10a is semicircular of 5 mm in diameter, and 2 mm in depth.
A length E is 16 mm (four-fifths of the length F)
A projection part 11 has an upstream angle of 90 degrees, and a height of 3 mm.
A resin pool 13 has a profile of a generally semicircle of 10 mm in diameter.
Turbulence generating means 17 is a coil spring having an outer diameter of 7 mm, a length of 300 mm, and a pitch of 7 mm.
A resin path 12a has a length of 40 mm in the flow direction.
A lip 15 has a width of 300 mm and a clearance of 1.2 mm.

The obtained polypropylene sheet had a width of 300 mm, and an average thickness of 1.5 mm with standard deviation of 0.06 mm when the thickness was measured at 14 points at 4 mm interval from the position of 50 mm from the end toward the center part. When the thickness was measured at 14 points at 4 mm interval toward the left and the right from the center part of the polypropylene sheet, the average thickness was 1.3 mm with a standard deviation of 0.03 mm.

### (Example 5)

100 parts by weight of polypropylene ("Novatech PPMA" (product name) made by Japan Polychem Corporation) and 0.1 part by weight of talc ("P talc" (product name) made by Takehara Kagaku Kogyo Co., Ltd.) were introduced into a Henschel mixer and mixed to give a polypropylene composition.

The obtained polypropylene composition was supplied to a biaxial extruder equipped with the extrusion die shown in Fig. 3 and Fig. 4 ("BT-50" (product name) manufactured by Research Laboratory of Plastics Technology Co., Ltd.), and after regulating the barrel temperature so that the temperature of polypropylene at a fusion part was 150°C, and the temperature of polypropylene at an extruder outlet was 130°C, nitrogen gas was supplied from a nitrogen cylinder through a gas injection nozzle at an injection pressure of 6.0 MPa at a rate of 112 g/hour (0.7 part by weight with respect to 100 parts by weight of the polypropylene composition), and extrusion foam molding was conducted at a screw rotation speed of 32 rpm in an extrusion amount of 16 kg/hour, to give a polypropylene foam sheet.

In the aforementioned biaxial extruder, a resin supply hopper and a gas injection nozzle were provided, and a gas injection outlet of the gas injection nozzle had an inner diameter of 1.6 mm, and the gas injection nozzle was disposed at a position of 65% of the screw flight from the side of the resin supply hopper so that the gas injection outlet projected by 5 mm from an inner wall of the cylinder.

On the downstream side of the extrusion die, a cooling sizing device having a clearance of 11 mm was provided, and the extruded polypropylene foam sheet was picked up under cooling by the cooling sizing device. The extrusion die was identical to that used in Example 4, and the lip had a width of 300 mm and a clearance of 1.2 mm.

The obtained polypropylene foam sheet was uniformly foamed to the ends, and had a width of 310 mm and an average expansion ratio of 7.5. Also, the polypropylene foam sheet was rubbed under pressure by the cooling sizing device and had excellent surface property. In addition, little variation was observed in quality even the resin temperature, the resin extrusion amount and the pickup velocity changed more ore less in extrusion foam molding, and stable extrusion foam molding was realized.

When the thickness of the obtained polypropylene foam sheet was measured at 26 points at 2 mm interval from the position of 10 mm from the end to the position of 60 mm toward the center, the average thickness was 11.9 mm with a standard deviation of 0.24 mm. Further, when the thickness was measured at 26 points at 2 mm interval in the left and right direction from the center of the polypropylene sheet, the average thickness was 11.2 mm with a standard deviation of 0.17 mm.

The obtained polypropylene foam sheet had a flexural modulus E of 40 MPa and a density ρ of 120 kg/m³, and E/ρ was 0.333 [MPa/(kg/m³)].

### (Example 6)

100 parts by weight of polypropylene ("Novatech PPMA" (product name) made by Japan Polychem Corporation) and 0.1 part by weight of talc ("P talc" (product name) made by Takehara Kagaku Kogyo Co., Ltd.) were introduced into a Henschel mixer and mixed to give a polypropylene composition.

The obtained polypropylene composition was supplied to a biaxial extruder of an extrusion molding apparatus in which the extrusion die shown in Fig. 3 and Fig. 4 was connected to the biaxial extruder ("BT-50" (product name) manufactured by Research Laboratory of Plastics Technology Co., Ltd.), and after regulating the barrel temperature so that the temperature of polypropylene at a fusion part was 150°C, and the temperature of polypropylene at an extruder outlet was 130°C, nitrogen gas was supplied from a nitrogen cylinder through a gas injection nozzle at an injection pressure of 6.0 MPa at a rate of 112g/hour (0.7 part by weight with respect to 100 parts by weight of the polypropylene composition), and extrusion foam molding was conducted at a screw rotation speed of 32 rpm in an extrusion amount of 16 kg/hour, to give a polypropylene foam sheet.

In the aforementioned biaxial extruder, a resin supply hopper and a gas injection nozzle were provided, and a gas injection outlet of the gas injection nozzle had an inner diameter of 1.6 mm, and the gas injection nozzle was disposed at a position of 65% of the screw flight from the side of the resin supply hopper so that the gas injection outlet projected by 5 mm from an inner wall of the cylinder.

On the downstream side of the extrusion die, a cooling device and a cooling sizing device having a clearance of 20 mm were provided, and the extruded polypropylene foam sheet was picked up under cooling by the cooling device and the cooling sizing device.

The extrusion die was identical to that used in Example 4, and the lip had a width of 300 mm and a clearance of 6 mm.

The cooling device had nine air supply holes at 10 mm interval on an air supply surface of 35 x 35 mm, the air supply hole having a diameter of 1.5 mm, and the air supply surface was arranged above and below the polypropylene foam sheet so as to face with the same, and the sheet was cooled by spraying air at 10°C through the air supply holes at right angles to the polypropylene foam sheet at a rate of 1.5 L per one minute.

The obtained polypropylene foam sheet was uniformly foamed to the ends, and had an average expansion ratio of 3.5. Also, the polypropylene foam sheet was rubbed under pressure by the cooling sizing device and had excellent surface property. In addition, little variation was observed in quality even the resin temperature, the resin extrusion amount and the pickup velocity changed more ore less in extrusion foam molding, and stable extrusion foam molding was realized.

The obtained polypropylene foam sheet had a width of 303 mm, and when the thickness was measured at 26 points at 2 mm interval from the position of 10 mm from the end to the position of 60 mm toward the center, the average thickness was 19.8 mm with a standard deviation of 0.32 mm. Further, when the thickness was measured at 26 points at 2 mm interval in the left and right direction from the center of the polypropylene foam sheet, the average thickness was 20.2 mm with a standard deviation of 0.28 mm.

The obtained polypropylene foam sheet had a flexural modulus E of 577 MPa and a density ρ of 270 kg/m³, and E/ρ was 2.137 [MPa/(kg/m³)].

Next, a glass fiber reinforced polypropylene sheet ("Twintex" (product name) made by Saint-Gobain K. K.) of 1 mm thick was thermally adhered to both faces of the obtained polypropylene foam sheet to give a laminate sheet. The obtained laminate sheet had a flexural modulus E of 4945 MPa.

### INDUSTRIAL APPLICABILITY

Since the extrusion die of the present invention is capable of uniformizing the resin flow rate and the pressure in the width and thickness directions in extrusion molding of the thermoplastic resin and readily accepting changes in width and thickness of the extruded sheet, it is possible to readily obtain a thermoplastic resin sheet and a thermoplastic resin foam sheet having even width and thickness of sheet and little weld lines in an extrusion molding apparatus in which the extrusion die is connected to an extruder.

Further, the obtained thermoplastic resin foam sheet and its laminate sheet are suited for structural materials such as a plastic concrete panel, a scaffold plate and the like because they have improved mechanical strength, rigidity and surface property.

## Claims

1. An extrusion die for extrusion molding a thermoplastic resin composition, comprising a resin path symmetrically branched plural times in a flow direction of a thermoplastic resin.

2. The extrusion die according to claim 1, further comprising a coathanger-like expanding part connected to an outlet of the branched resin path.

3. The extrusion die according to claim 2, further comprising an auxiliary flow path in the shape of recess groove, provided on the left and right sides of the expanding part.

4. The extrusion die according to claim 3, wherein the auxiliary flow path has a length which is two-thirds to four-fifths of a distance from an outlet of the upstream resin path to an abutment part with an adjacent expanding part.

5. The extrusion die according to any one of claims 1 to 4, further comprising at least one resin pool provided on the downstream side of outlet of the branched resin path.

6. The extrusion die according to claim 5, wherein the resin pool is provided with turbulence generating means.

7. The extrusion die according to claim 5 or 6, wherein the length of resin path in the flow direction between the resin pool and a lip is one-tenth to three-tenths of a width of the lip.

8. An extrusion molding apparatus comprising the extrusion die according to any one of claims 1 to 7 connected to a uniaxial or biaxial extruder.

9. The extrusion molding apparatus according to claim 8, further comprising an air-cooling device and/or a cooling sizing device provided on the downstream side of the lip of the extrusion die.

10. The extrusion molding apparatus according to claim 8 or 9, wherein the uniaxial or biaxial extruder includes a cylinder, a resin supply hopper and a gas injection nozzle provided for the cylinder, and a screw having a screw flight accommodated in the cylinder, and the gas injection nozzle has an inner diameter of 2.0 mm or less, and disposed in a position of 60 to 70% from the position of the resin supply hopper of the screw flight so that a gas injection outlet of the gas injection nozzle is located inward from an inner wall of the cylinder by 1 mm or more.

11. A method of producing a thermoplastic resin sheet, comprising conducting extrusion molding while supplying a thermoplastic resin composition to an extruder of the extrusion molding apparatus according to any one of claims 8 to 10.

12. A method of producing a thermoplastic resin foam sheet, comprising conducting extrusion molding while supplying a thermoplastic resin composition, which includes a thermoplastic resin and a thermo-decomposable chemical foaming agent, to an extruder of the extrusion molding apparatus according to any one of claims 8 to 10.

13. A method of producing a thermoplastic resin foam sheet, comprising conducting extrusion molding while supplying a thermoplastic resin composition, which includes a thermoplastic resin and a physical foaming agent, to an extruder of the extrusion molding apparatus according to any one of claims 8 to 10.

14. The method of producing a thermoplastic resin foam sheet according to claim 13, wherein the physical foaming agent is inorganic gas.

15. The method of producing a thermoplastic resin foam sheet according to claim 14, wherein the inorganic gas is carbon dioxide gas, nitrogen gas or argon gas.

16. A thermoplastic resin sheet obtained by the method of producing a thermoplastic resin sheet according to claim 11.

17. A thermoplastic resin foam sheet obtained by the method of producing a thermoplastic resin foam sheet according to any one of claims 12 to 15.

18. The thermoplastic resin foam sheet according to claim 17, having an expansion ratio of 1.5 to 10, and E (flexural modulus)/ρ (density) of 0.8 to 3.0 [MPa/(kg/m³)].

19. The thermoplastic resin foam sheet according to claim 18, having an expansion ratio of 3 to 5.

20. The thermoplastic resin foam sheet according to claim 18 or 19, having a thickness of 10 to 30 mm.

21. The thermoplastic resin foam sheet according to any one of claims 17 to 20, having a width of 250 mm or more.

22. The thermoplastic resin foam sheet according to any one of claims 17 to 21, which is a plastic concrete panel or a scaffold plate.

23. A laminate sheet comprising a skin material overlaid on at least one face of the thermoplastic resin foam sheet according to any one of claims 16 to 21.

24. The laminate sheet according to claim 23, wherein the skin material is a thermoplastic resin sheet, nonwoven or woven fabric of organic or inorganic fiber, a fiber reinforced thermoplastic resin sheet, or a metal sheet.

25. The laminate sheet according to claim 23 or 24, which is a plastic concrete panel or a scaffold plate.
